# EUROPÄISCHE PATENTANMELDUNG

(11) **EP 3 249 802 A1**
(43) Veröffentlichungstag der Anmeldung: **29.11.2017**
(21) Anmeldenummer: 16170952.2
(22) Anmeldetag: 24.05.2016
(51) Int. Cl.: H02P 9/42

(54) **VERFAHREN ZUM VERSORGEN EINER ERREGERWICKLUNG EINES ROTORS MIT EINEM ERREGERSTROM, VERFAHREN ZUM BETREIBEN EINER ANLAGE ZUM ERZEUGEN EINER DREIPHASENWECHSELSPANNUNG SOWIE EINE ENTSPRECHENDE ANLAGE**

(71) Anmelder: Siemens Aktiengesellschaft, 80333 München (DE)
(72) Erfinder: BENNAUER, Martin, 46242 Bottrop (DE); GUTERMUTH, Manuel, 45309 Essen (DE); JÄKEL, Christian, 47169 Duisburg (DE); KLOCKE, Meinolf, 58452 Witten (DE); KOEBE, Mario, 45478 Mühlheim an der Ruhr (DE); KOWALSKI, Matthias, 45478 Mühlheim an der Ruhr (DE)

(57) **Zusammenfassung**

Die Erfindung betrifft ein Verfahren zum Versorgen einer Erregerwicklung eines Rotors eines Drehstromgenerators einer Anlage zum Erzeugen einer in ein Stromnetz einzuspeisenden Dreiphasenwechselspannung mit einem Erregerstrom. Die Erregerwicklung wird bei einer Abweichung einer Drehfrequenz des Rotors von einer Netzfrequenz des Stromnetzes mit einem gepulsten Erregerstrom versorgt.

## Beschreibung

Die Erfindung betrifft ein Verfahren zum Versorgen einer Erregerwicklung eines Rotors eines Drehstromgenerators einer Anlage zum Erzeugen einer in ein Stromnetz einzuspeisenden Dreiphasenwechselspannung mit einem Erregerstrom.

Des Weiteren betrifft die Erfindung ein Verfahren zum Betreiben einer Anlage zum Erzeugen einer in ein Stromnetz einzuspeisenden Dreiphasenwechselspannung.

Ferner betrifft die Erfindung eine Anlage zum Erzeugen einer in ein Stromnetz einzuspeisenden Dreiphasenwechselspannung, aufweisend wenigstens eine Turbine, wenigstens einen mit der Turbine angetriebenen Drehstromgenerator und wenigstens eine Versorgung einer Erregerwicklung eines Rotors des Drehstromgenerators mit einem Erregerstrom steuernde und/oder regelnde Steuer- und/oder Regeleinheit, wobei ein Turbinenläufer der Turbine drehfest mit dem Rotor verbunden ist.

Anlagen zum Erzeugen einer in ein Stromnetz einzuspeisenden Dreiphasenwechselspannung sind hinlänglich bekannt und werden in Kraftwerken eingesetzt. Eine solche Anlage kann wenigstens eine Turbine und wenigstens einen mit der Turbine angetriebenen Drehstromgenerator, insbesondere Turbogenerator, aufweisen. Die Turbine kann beispielsweise eine Gasturbine eines Gas-und-Dampfturbinen-Kraftwerks (GuD) oder eines Gasturbinen-Kraftwerks oder eine Dampfturbine eines Dampfturbinen-kraftwerks sein.

Ein Turbinenläufer der Turbine ist herkömmlich starr bzw. drehfest mit einem Rotor des Drehstromgenerators verbunden. Um durch eine Rotation des Turbinenläufers eine Dreiphasenwechselspannung mit einer üblichen Netzfrequenz in Höhe von 50 Hz oder 60 Hz mit dem Drehstromgenerator erzeugen und in ein Stromnetz einspeisen zu können, muss daher der Turbinenläufer herkömmlich mit einer Betriebsfrequenz in Höhe von 50 Hz bzw. 60 Hz rotieren.

Beim Hochfahren einer solchen Anlage benötigt die Anlage nach einem Erreichen einer zur Netzfrequenz des Stromnetzes synchronen Drehfrequenz eine bestimmte Zeit, um eine mögliche Phasenverschiebung zwischen der Netzfrequenz und der Drehfrequenz ausgleichen zu können. Diese Zeit steht nicht für eine Einspeisung der von der Anlage erzeugten Dreiphasenwechselspannung in das Stromnetz zur Verfügung.

Bei einem solchen Hochfahren der Anlage kann die Drehzahl des Turbinenläufers bzw. des Rotors beispielweise auf 3000 U/min beschleunigt werden. Herkömmlich wird hierbei durch einen als Gleichstrom ausgebildeten Erregerstrom, mit dem die Erregerwicklung des Rotors versorgt wird, zwischen dem Rotor und einem Stator des Drehstromgenerators ein sich mit 3000 U/min drehendes Magnetfeld erzeugt. Dieses Magnetfeld induziert in eine Statorwicklung des Stators eine Dreiphasenwechselspannung mit einer der jeweiligen Netzfrequenz, beispielsweise in Höhe von 50 Hz, entsprechenden Frequenz. Nach einem oben beschriebenen Ausgleich von eventuellen Phasenverschiebungen kann ein Generatorschalter den Drehstromgenerator und das Stromnetz zusammenschalten. Der Turbinenläufer und der Rotor laufen dann synchron zum Stromnetz. Die Anlage nimmt Last auf und speist die Dreiphasenwechselspannung in das Stromnetz ein.

In bestimmten Fällen, insbesondere wenn eine solche Anlage in einem Frequenzstützbetrieb betrieben wird, wird die Drehzahl des Turbinenläufers bzw. des Rotors an die Netzfrequenz angepasst. Die Anlage versucht hierbei, die Netzfrequenz zur Stabilisierung des Stromnetzes durch Gegensteuern, insbesondere durch Variieren der Drehzahl, zu halten. Für eine solche Anlage ist aus rotordynamischen Gründen und aus Stabilitätsgründen eines Verdichters der Turbine, insbesondere Gasturbine, nur ein bestimmtes Frequenzband freigegeben, in dem ein beschriebener Frequenzstützbetrieb möglich ist.

Eine Aufgabe der Erfindung ist es, die Auslastbarkeit einer Anlage zum Erzeugen einer in ein Stromnetz einzuspeisenden Dreiphasenwechselspannung zu erhöhen. Eine weitere Aufgabe der Erfindung ist es, die Einsetzbarkeit von Turbinen entsprechender Anlagen, deren Turbinenläuferdrehfrequenz kleiner als die Netzfrequenz des jeweiligen Stromnetzes ist, zum Versorgen des Stromnetzes mit einer Dreiphasenwechselspannung mit der Netzfrequenz zu ermöglichen. Eine weitere Aufgabe der Erfindung ist es, einen Frequenzstützbetrieb einer entsprechenden Anlage zu verbessern.

Nach einem erfindungsgemäßen Verfahren zum Versorgen einer Erregerwicklung eines Rotors eines Drehstromgenerators einer Anlage zum Erzeugen einer in ein Stromnetz einzuspeisenden Dreiphasenwechselspannung mit einem Erregerstrom wird die Erregerwicklung bei einer Abweichung einer Drehfrequenz des Rotors von einer Netzfrequenz des Stromnetzes mit einem gepulsten Erregerstrom versorgt.

Erfindungsgemäß werden Abweichungen der Drehzahl des Rotors des Drehstromgenerators von der Netzfrequenz des Stromnetzes durch eine Versorgung der Erregerwicklung des Rotors mit einem gepulsten Erregerstrom ausgeglichen. Hierdurch kann mittels des Drehstromgenerators eine Dreiphasenwechselspannung mit der Netzfrequenz erzeugt werden, auch wenn sich die Drehfrequenz des Rotors von der Netzfrequenz unterscheidet. Daher muss nicht, wie herkömmlich, die Drehzahl des Turbinenläufers bzw. des damit drehfest verbundenen Rotors variiert werden, um die Frequenz der von dem Drehstromgenerator erzeugten Dreiphasenwechselspannung an die Netzfrequenz anpassen zu können. Vielmehr kann die Anlage, bzw. können deren Komponenten, wie etwa die Turbine und der Drehstromgenerator, auf einen optimalen Betriebspunkt ausgelegt und während der genannten Angleichung in dem Betriebspunkt gehalten werden, was den Wirkungsgrad der Anlage insgesamt erhöht.

Ist beispielsweise die Drehfrequenz des Rotors kleiner als die jeweilige Netzfrequenz, kann die Erregerwicklung mit einem gepulsten Erregerstrom versorgt werden. Hierdurch wird zwischen dem Rotor und einem Stator des Drehstromgenerators ein Magnetfeld erzeugt, das sich mit einer der Netzfrequenz entsprechenden Frequenz dreht. Eine Statorwicklung des Stators sieht also ein Magnetfeld, das sich mit der der Netzfrequenz entsprechenden Frequenz dreht, wodurch in die Statorwicklung eine Wechselspannung mit der Netzfrequenz induziert wird.

Hierdurch kann schon während eines Hochfahrens der Anlage bzw. zu einem früheren Zeitpunkt eine Dreiphasenwechselspannung mit einer der Netzfrequenz entsprechenden Frequenz in dem Stator erzeugt werden. Dadurch kann eine Synchronisation zwischen der Dreiphasenwechselspannung und dem Stromnetz schon zu einem sehr frühen Zeitpunkt während des Hochfahrens der Anlage erfolgen, wodurch die benötigte Zeit zu dieser Synchronisation deutlich verkürzt werden kann. Die Synchronisation kann also bereits zu einem Zeitpunkt erfolgen, in dem die Drehfrequenz des Rotors nicht der Netzfrequenz entspricht. Folglich wird hierdurch die Auslastbarkeit der Anlage deutlich erhöht gegenüber einer herkömmlichen Anlage, wie sie eingangs beschrieben ist. Nach der Synchronisation kann die Erregerwicklung mit einem Gleichstrom versorgt werden. Durch die frühere Synchronisation kann die Anlage gegenüber einer herkömmlichen Anlage deutlich früher eine elektrische Leistung dem Stromnetz zur Verfügung stellen.

Da die Leistung und der Wirkungsgrad von Gasturbinen mit einer Betriebsfrequenz von 50 Hz (50Hz-Gasturbinen) größer sind als bei entsprechenden 60Hz-Gasturbinen, besteht ein Interesse daran, 50Hz-Gasturbinen auch zur Versorgung von Stromnetzen mit einer Netzfrequenz von 60 Hz (60Hz-Stromnetzen) einzusetzen.

Durch die Versorgung der Erregerwicklung des Rotors mit einem gepulsten Erregerstrom können sich zwischen dem Stator und dem Rotor ein sich drehendes Magnetfeld, dessen Drehfrequenz größer als die Drehfrequenz des Rotors ist, und ein weiteres sich drehendes Magnetfeld, dessen Drehfrequenz kleiner als die Drehfrequenz des Rotors ist, ausbilden. Bei einer Drehfrequenz des Rotors beispielsweise in Höhe von 50 Hz können durch eine geeignete Wahl des gepulsten Erregerstroms ein sich mit einer Drehfrequenz in Höhe von 60 Hz drehendes Magnetfeld und ein sich mit einer Drehfrequenz in Höhe von 40 Hz drehendes Magnetfeld ausgebildet werden. Dies hat zur Folge, dass in die Statorwicklung eine Wechselspannung mit einer Frequenz in Höhe von 60 Hz und eine Wechselspannung mit einer Frequenz in Höhe von 40 Hz induziert werden. Mit einem geeigneten Mittel kann die 40Hz-Wechselspannung aus der mit dem Drehstromgenerator erzeugten Dreiphasenwechselspannung herausgefiltert werden, so dass an einem Maschinentransformator, über den der Drehstromgenerator mit dem Stromnetz verbunden ist, eine 60Hz-Dreiphasenwechselspannung anliegt, um diese mit entsprechender Leistung dem Stromnetz zur Verfügung stellen zu können. Folglich ist es mit dem erfindungsgemäßen Verfahren möglich, mit einer Turbine, deren Turbinenläuferdrehfrequenz kleiner als die Netzfrequenz des Stromnetzes ist, eine Dreiphasenwechselspannung mit der Netzfrequenz in das Stromnetz einzuspeisen. Hierdurch kann eine höhere spezifische Leistung erzielt werden.

Durch die Versorgung der Erregerwicklung des Rotors mit einem gepulsten Erregerstrom kann also die Statorwicklung des Stators ein Magnetfeld sehen, das sich mit der Netzfrequenz dreht. Durch eine geeignete Wahl des gepulsten Erregerstroms kann hierdurch eine Frequenzunterstützung durch die Anlage unabhängig von der Drehfrequenz des Rotors gewährleistet werden. Insbesondere kann die Anlage eine Frequenzstützung in einem sehr viel breiteren Frequenzband anbieten als herkömmliche Anlagen. Die Auslegung der Komponenten der Anlage muss nicht derart erfolgen, dass die Komponenten der Anlage ein bestimmtes Frequenzstützband erfüllen können müssen. Stattdessen können die Komponenten auf einen bestimmten Betriebspunkt ausgelegt werden, in welchem insbesondere die Anlage einen hohen Wirkungsgrad und eine hohe Dauerhaftigkeit aufweist. Es kann also eine Anlage mit einem verbesserten Frequenzstützbetrieb bereitgestellt werden.

Der gepulste Erregerstrom wird bevorzugt derart erzeugt, dass eine Frequenz des gepulsten Erregerstroms einer aus einer Subtraktion der Drehfrequenz von der Netzfrequenz folgenden Differenzfrequenz entspricht. Der gepulste Erregerstrom wird hiernach in Abhängigkeit der jeweiligen Drehfrequenz erzeugt.

Bevorzugt wird der gepulste Erregerstrom derart erzeugt, dass er einen sinusförmigen, rechteckigen, dreieckigen oder sägezahnförmigen Verlauf über die Zeit aufweist. Hierdurch kann der gepulste Erregerstrom optimal an den jeweiligen Anwendungsfall angepasst werden. Es kann auch möglich sein, dass die Form des Verlaufs des gepulsten Erregerstroms während einer Versorgung der Erregerwicklung mit dem gepulsten Erregerstrom variiert wird.

Der gepulste Erregerstrom wird bevorzugt derart erzeugt, dass zwischen dem Rotor und einem Stator des Drehstromgenerators ein magnetisches 60Hz-Drehfeld und ein sich hierzu in entgegengesetzter Richtung drehendes magnetisches 40Hz-Drehfeld erzeugt werden. Hierdurch werden in der Statorwicklung des Stators eine 60Hz-Wechselspannung und eine 40Hz-Wechselspannung erzeugt. Letztere kann aus einer von dem Drehstromgenerator erzeugten Dreiphasenwechselspannung herausgefiltert werden, so dass einem 60Hz-Stromnetz eine 60Hz-Dreiphasenwechselspannung zur Verfügung gestellt werden kann. Dies macht insbesondere die Verwendung einer 50Hz-Turbine, beispielsweise 50Hz-Gasturbine, zur Erzeugung einer 60Hz-Dreiphasenwechselspannung möglich.

Nach einem erfindungsgemäßen Verfahren zum Betreiben einer Anlage zum Erzeugen einer in ein Stromnetz einzuspeisenden Dreiphasenwechselspannung wird eine Erregerwicklung eines Rotors eines Drehstromgenerators der Anlage unter Verwendung eines Verfahrens gemäß einer der vorgenannten Ausgestaltungen oder einer beliebigen Kombination von wenigstens zwei dieser Ausgestaltungen miteinander mit einem gepulsten Erregerstrom versorgt, wobei Spannungsanteile einer von einer Statorwicklung des Stators erzeugten Dreiphasenwechselspannung, die von der Netzfrequenz abweichen, aus der Dreiphasenwechselspannung herausgefiltert werden.

Mit diesem Verfahren sind die oben mit Bezug auf das Verfahren zum Versorgen einer Erregerwicklung eines Rotors eines Drehstromgenerators einer Anlage zum Erzeugen einer Dreiphasenwechselspannung mit einem Erregerstrom genannten Vorteile entsprechend verbunden.

Durch den gepulsten Erregerstrom wird auch eine Wechselspannung in der Statorwicklung erzeugt, deren Frequenz einer Differenzfrequenz entspricht, die einer Subtraktion der Frequenz des gepulsten Erregerstroms von der Drehfrequenz des Rotors entspricht. Dieser Spannungsanteil wird aus der mit dem Drehstromgenerator erzeugten Dreiphasenwechselspannung mit geeigneten Mitteln herausgefiltert. Alternativ kann ein anderweitig erzeugter Spannungsanteil aus dem Drehstrom herausgefiltert werden.

Die Spannungsanteile werden bevorzugt mit wenigstens einem Frequenzfilter oder wenigstens einem Saugkreis aus der Dreiphasenwechselspannung herausgefiltert. Der Frequenzfilter kann für jede Phase der erzeugten Dreiphasenwechselspannung einen Reihenschwingkreis aufweisen.

Eine erfindungsgemäße Anlage zum Erzeugen einer in ein Stromnetz einzuspeisenden Dreiphasenwechselspannung umfasst wenigstens eine Turbine, wenigstens einen mit der Turbine angetriebenen Drehstromgenerator und wenigstens eine Versorgung einer Erregerwicklung eines Rotors des Drehstromgenerators mit einem Erregerstrom steuernde und/oder regelnde Steuer- und/oder Regeleinheit. Ein Turbinenläufer der Turbine ist drehfest mit dem Rotor verbunden. Die Steuer- und/oder Regeleinheit ist eingerichtet, die Erregerwicklung bei einer Abweichung einer Drehfrequenz des Rotors von einer Netzfrequenz des Stromnetzes mit einem gepulsten Erregerstrom zu versorgen.

Mit der Anlage sind die oben mit Bezug auf die Verfahren genannten Vorteile entsprechend verbunden. Insbesondere kann die Anlage zur Durchführung dieser Verfahren eingesetzt werden.

Die Turbine kann eine Gasturbine oder eine Dampfturbine sein. Insbesondere kann die Turbine eine 50Hz- oder 60Hz-Gasturbine oder eine 50Hz- oder 60Hz- Dampfturbine sein. Der Drehstromgenerator kann herkömmlich ausgebildet sein. Die Steuer- und/oder Regeleinheit kann durch einen Teil einer Anlagenelektronik oder separat davon ausgebildet sein. Die Steuer- und/oder Regeleinheit kann eine Rechnereinheit und eine Speichereinheit umfassen.

Die Steuer- und/oder Regeleinheit ist bevorzugt eingerichtet, die Drehfrequenz von der Netzfrequenz zu subtrahieren und eine daraus folgende Differenzfrequenz als eine Frequenz des gepulsten Erregerstroms festzulegen. Mit dieser Ausgestaltung sind die oben mit Bezug auf die entsprechende Ausgestaltung des erstgenannten Verfahrens genannten Vorteile entsprechend verbunden.

Bevorzugt umfasst die Anlage wenigstens einen Frequenzfilter oder wenigstens einen Saugkreis, mit dem Spannungsanteile einer von einer Statorwicklung eines Stators des Drehstromgenerators erzeugten elektrischen Spannung, die von der Netzfrequenz abweichen, aus der elektrischen Spannung herausfilterbar sind. Mit dieser Ausgestaltung sind die oben mit Bezug auf die entsprechenden Ausgestaltungen des zweitgenannten Verfahrens genannten Vorteile entsprechend verbunden.

Im Folgenden wird die Erfindung unter Bezugnahme auf die anliegenden Figuren anhand bevorzugter Ausführungsformen beispielhaft erläutert, wobei die nachfolgend dargestellten Merkmale sowohl jeweils für sich genommen, als auch in unterschiedlicher Kombination miteinander einen Aspekt der Erfindung darstellen können. Es zeigen:
- Fig. 1: eine schematische Darstellung eines Ausführungsbeispiels für eine erfindungsgemäße Anlage;
- Fig. 2: einen schematischen Längsschnitt eines Drehstromgenerators eines Ausführungsbeispiels für eine erfindungsgemäße Anlage; und
- Fig. 3: einen schematischen Querschnitt des in Fig. 2 gezeigten Drehstromgenerators.

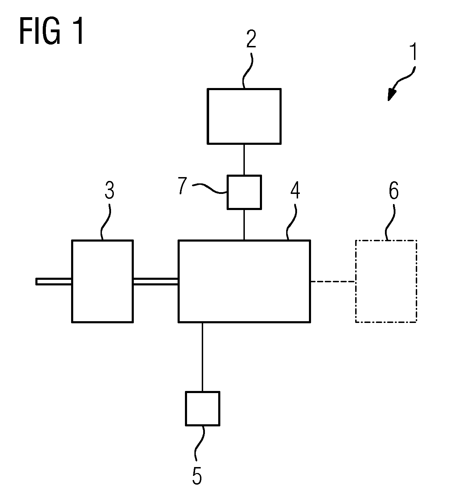

Fig. 1 zeigt eine schematische Darstellung eines Ausführungsbeispiels für eine erfindungsgemäße Anlage 1 zum Erzeugen einer in ein Stromnetz 2 einzuspeisenden Dreiphasenwechselspannung.

Die Anlage 1 umfasst eine Turbine 3 in Form einer Gasturbine, einen mit der Turbine 3 angetriebenen Drehstromgenerator 4 und eine eine Versorgung einer nicht gezeigten Erregerwicklung eines nicht gezeigten Rotors des Drehstromgenerators 4 mit einem Erregerstrom steuernde und/oder regelnde Steuer- und/oder Regeleinheit 5. Ein nicht gezeigter Turbinenläufer der Turbine 3 ist drehfest mit dem Rotor verbunden. Alternativ kann die Anlage 1 wenigstens eine Dampfturbine 6 statt der Turbine 3 aufweisen, mit welcher der Rotor des Drehstromgenerators 4 antreibbar ist.

Die die Steuer- und/oder Regeleinheit 5 ist eingerichtet, die Erregerwicklung bei einer Abweichung einer Drehfrequenz des Rotors von einer Netzfrequenz des Stromnetzes 2 mit einem gepulsten Erregerstrom zu versorgen. Hierzu kann die Steuer- und/oder Regeleinheit 5 einen Pulsationsmodulator aufweisen. Insbesondere ist die Steuer- und/oder Regeleinheit 5 eingerichtet, die Drehfrequenz von der Netzfrequenz zu subtrahieren und eine daraus folgende Differenzfrequenz als eine Frequenz des gepulsten Erregerstroms festzulegen. Die Steuer- und/oder Regeleinheit 5 erzeugt somit den gepulsten Erregerstrom in Abhängigkeit dieser Differenzfrequenz. Der gepulste Erregerstrom kann einen sinusförmigen, rechteckigen, dreieckigen oder sägezahnförmigen Verlauf über die Zeit aufweisen.

Die Anlage 1 umfasst zudem einen Frequenzfilter 7 oder wenigstens einen nicht gezeigten Saugkreis, mit dem Spannungsanteile einer von einer nicht gezeigten Statorwicklung eines nicht gezeigten Stators des Drehstromgenerators 4 erzeugten Dreiphasenwechselspannung, die von der Netzfrequenz abweichen, aus der Dreiphasenwechselspannung herausfilterbar sind.

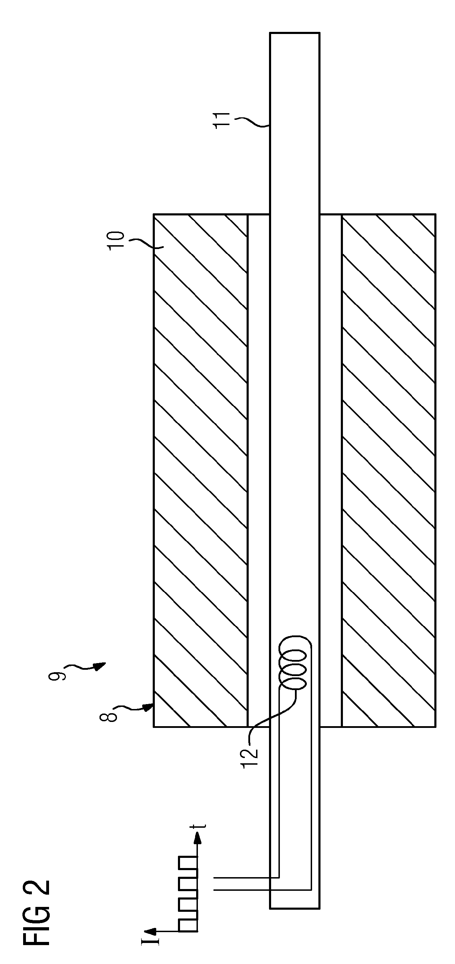

Fig. 2 zeigt einen schematischen Längsschnitt eines Drehstromgenerators 8 eines Ausführungsbeispiels für eine erfindungsgemäße Anlage 9.

Der Drehstromgenerator 8 umfasst einen Stator 10, der ein nicht näher dargestelltes Blechpaket und eine daran angeordnete, eine nicht gezeigte Statorwicklung aufweist. Des Weiteren umfasst der Drehstromgenerator 8 einen Rotor 11 mit einer Erregerwicklung 12, die mit einem gepulsten Erregerstrom I mit rechteckigem Verlauf über die Zeit t versorgt wird.

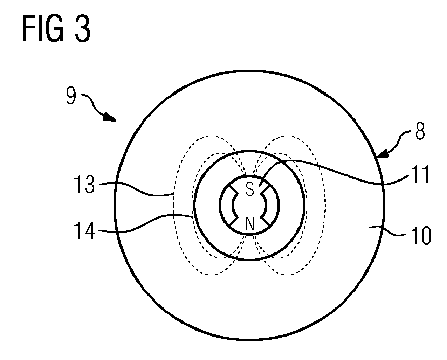

Fig. 3 zeigt einen schematischen Querschnitt des in Fig. 2 gezeigten Drehstromgenerators 8. Der Rotor 11 umfasst die magnetischen Pole N (Nordpol) und S (Südpol). Es sind Feldlinien von zwei magnetischen Drehfeldern 13 und 14 durch gestrichelte Linien angedeutet, die durch die Versorgung der nicht gezeigten Erregerwicklung des Rotors 11 mit dem gepulsten Erregerstrom entstehen. Die Drehfrequenzen der beiden magnetischen Drehfelder 13 und 14 können derart gewählt sein, dass eine Summe der beiden Drehfrequenzen der jeweiligen Netzfrequenz des nicht gezeigten Stromnetzes entspricht.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Versorgen einer Erregerwicklung (12) eines Rotors (11) eines Drehstromgenerators (4, 8) einer Anlage (1, 9) zum Erzeugen einer in ein Stromnetz (2) einzuspeisenden Dreiphasenwechselspannung mit einem Erregerstrom, **dadurch gekennzeichnet, dass**
die Erregerwicklung (12) bei einer Abweichung einer Drehfrequenz des Rotors (11) von einer Netzfrequenz des Stromnetzes (2) mit einem gepulsten Erregerstrom (I) versorgt wird.

2. Verfahren gemäß Anspruch 1,
wobei der gepulste Erregerstrom (I) derart erzeugt wird, dass eine Frequenz des gepulsten Erregerstroms (I) einer aus einer Subtraktion der Drehfrequenz von der Netzfrequenz folgenden Differenzfrequenz entspricht.

3. Verfahren gemäß Anspruch 1 oder 2,
wobei der gepulste Erregerstrom (I) derart erzeugt wird, dass der gepulste Erregerstrom (I) einen sinusförmigen, rechteckigen, dreieckigen oder sägezahnförmigen Verlauf über die Zeit (t) aufweist.

4. Verfahren gemäß einem der Ansprüche 1 bis 3,
wobei der gepulste Erregerstrom (I) derart erzeugt wird, dass zwischen dem Rotor (11) und einem Stator (10) des Drehstromgenerators (4, 8) ein magnetisches 60Hz-Drehfeld und ein sich hierzu in entgegengesetzter Richtung drehendes magnetisches 40Hz-Drehfeld erzeugt wird.

5. Verfahren zum Betreiben einer Anlage (1, 9) zum Erzeugen einer in ein Stromnetz (2) einzuspeisenden Dreiphasenwechselspannung,
**dadurch gekennzeichnet, dass**
eine Erregerwicklung (12) eines Rotors (11) eines Drehstromgenerators (4, 8) der Anlage (1, 9) unter Verwendung eines Verfahrens gemäß einem der Ansprüche 1 bis 4 mit einem gepulsten Erregerstrom (I) versorgt wird, wobei Spannungsanteile einer von einer Statorwicklung des Stators (10) erzeugten Dreiphasenwechselspannung, die von der Netzfrequenz abweichen, aus der Dreiphasenwechselspannung herausgefiltert werden.

6. Verfahren gemäß Anspruch 5,
wobei die Spannungsanteile mit wenigstens einem Frequenzfilter (7) oder wenigstens einem Saugkreis aus der Dreiphasenwechselspannung herausgefiltert werden.

7. Anlage (1, 9) zum Erzeugen einer in ein Stromnetz (2) einzuspeisenden Dreiphasenwechselspannung, aufweisend wenigstens eine Turbine (3, 6), wenigstens einen mit der Turbine (3, 6) angetriebenen Drehstromgenerator (4, 8) und wenigstens eine eine Versorgung einer Erregerwicklung (12) eines Rotors (11) des Drehstromgenerators (4, 8) mit einem Erregerstrom steuernde und/oder regelnde Steuer- und/oder Regeleinheit (5), wobei ein Turbinenläufer der Turbine (3, 6) drehfest mit dem Rotor (11) verbunden ist, **dadurch gekennzeichnet, dass**
die Steuer- und/oder Regeleinheit (5) eingerichtet ist, die Erregerwicklung (12) bei einer Abweichung einer Drehfrequenz des Rotors (11) von einer Netzfrequenz des Stromnetzes (2) mit einem gepulsten Erregerstrom (I) zu versorgen.

8. Anlage (1, 9) gemäß Anspruch 7,
wobei die Steuer- und/oder Regeleinheit (5) eingerichtet ist, die Drehfrequenz von der Netzfrequenz zu subtrahieren und eine daraus folgende Differenzfrequenz als eine Frequenz des gepulsten Erregerstroms (I) festzulegen.

9. Anlage (1, 9) gemäß Anspruch 7 oder 8,
aufweisend wenigstens einen Frequenzfilter (7) oder wenigstens einen Saugkreis, mit dem Spannungsanteile einer von einer Statorwicklung eines Stators (10) des Drehstromgenerators (4, 8) erzeugten Dreiphasenwechselspannung, die von der Netzfrequenz abweichen, aus der Dreiphasenwechselspannung herausfilterbar sind.
